# FASCICULE DE BREVET EUROPEEN

(11) **EP 2 172 910 B1**
(45) Date de publication et mention de la délivrance du brevet: **21.02.2018**
(21) Numéro de dépôt: 09171580.5
(22) Date de dépôt: 29.09.2009
(51) Int. Cl.: G07C 9/00, H01R 13/52, H05K 5/02

(54) **Clef électronique munie d'une connectique de contact pour véhicule automobile**
Elektronischer Schlüssel mit einem Kontaktanschluss für Kraftfahrzeug
Electronic key with a contact connector for a vehicle

(30) Priorité: 01.10.2008 FR 0805455
(43) Date de publication de la demande: 07.04.2010
(73) Titulaire: Valeo Sécurité Habitacle, 94046 Créteil Cedex (FR)
(72) Inventeur: Masson, Fabienne, 94042, Creteil (FR); Musat, Ciprian, 94042, Creteil (FR); Delande, Benoit, 94042, Creteil (FR)
(74) Mandataire: Pothmann, Karsten

(56) Documents cités:
- EP-A- 1 633 020
- EP-A- 1 881 567
- FR-A- 2 882 604
- US-A1- 2008 077 292
- US-B1- 7 347 731

## Description

La présente invention concerne une clef électronique munie d'une connectique de contact pour véhicule automobile.

Il est connu d'équiper un véhicule automobile avec une clef électronique munie d'une connectique permettant, lors d'un contact avec un système extérieur, de recevoir des données et/ou de l'énergie électrique à partir de ce système, voir par exemple le document FR2882604. Ce contact est généralement établi au moyen d'une prise USB - de l'anglais Universal Serial Bus - qui présente de nombreux avantages. Notamment, les prises USB permettent la réalisation simultanée des deux fonctions précédemment décrites - transfert de données et transmission d'énergie électrique. En outre, leur utilisation est relativement généralisée.

Toutefois, la présente invention résulte de la constatation qu'une connectique du type USB présente des inconvénients pour son application dans le domaine automobile.

De fait, la prise type USB ne répond pas aux critères de fiabilité élevés du domaine automobile en termes de robustesse ou d'étanchéité.

Concernant la robustesse, une prise USB présente une résistance à l'usure limitée compte tenu notamment des déformations mécaniques subies par la prise après de nombreuses utilisations. De ce fait, on considère qu'un maximum de 10 000 cycles de connexion/déconnexion est atteint avant qu'une prise du type USB ne présente une défaillance.

Concernant l'étanchéité, une prise USB présente une étanchéité relative obtenue par « potting », c'est-à-dire par un coulage de résine qui peut présenter des fissures à l'usage.

Or, il est indispensable pour le bon fonctionnement de la clef électronique, de préserver une étanchéité maximum dans les zones où sont logés les éléments électroniques.

La présente invention vise à résoudre au moins un des problèmes précédemment mentionnés en fournissant une clef électronique présentant des caractéristiques techniques - notamment en termes de robustesse et d'étanchéité - répondant aux exigences du domaine automobile.

A cette fin, l'invention propose une clef électronique pour véhicule automobile telle que définie par la revendication 1. Grâce à cette disposition des plots sur le support de plot(s) interne on réalise la connectique de la clef électronique et l'étanchéité de la clef électronique peut être aisément obtenue au niveau de la zone sèche et ainsi protéger les éléments électroniques logés dans cette zone sèche.

En outre, la robustesse de la connectique d'une clef électronique conforme à l'invention est accrue par rapport à une clef électronique utilisant simplement une connectique du type USB. De fait, la connexion par plot(s) s'effectue par simple contact entre le plot et un élément correspondant du système extérieur, ce qui limite l'usure de la connectique.

Une clef électronique selon l'invention peut également présenter une ou plusieurs des caractéristiques ci-dessous, considérées individuellement ou selon toutes les combinaisons techniquement possibles :
Selon l'invention, le plot est agencé de façon étanche au support de plot(s) interne.

Selon une réalisation, au moins un joint est maintenu entre le plot et le support de plot(s) interne de la clef électronique.

Dans une réalisation, le plot est maintenu solidaire du support de plot(s) interne au moyen d'un clip.

Selon une réalisation, le plot est maintenu solidaire du support de plot(s) interne au moyen de colle.

Dans une réalisation, le plot est maintenu solidaire du support de plot(s) interne par compression de ce support de plot(s) interne sur le plot.

Selon l'invention, le support de plot(s) interne est recouvert par une coque externe de la clef électronique.

Selon une réalisation, une étanchéité est assurée à l'interface entre la coque externe et le support de plot(s) interne au niveau des plots. Selon l'invention, la coque externe présente une connectique du type USB, mini USB ou micro USB.

Dans une réalisation non revendiquée, la coque externe présente des évidements au niveau des plots afin que ces plots soient accessibles au système extérieur à travers la coque externe.

D'autres caractéristiques et avantages de l'invention ressortiront clairement de la description qui est donnée ci-dessous, à titre indicatif et non limitatif, d'une réalisation de l'invention faite en référence aux figures annexées, parmi lesquelles :
- la figure 1 représente une clef électronique avec deux variantes de coques externes, l'une étant conforme à l'invention et l'autre correspondant à un exemple de réalisation non revendiqué,
- les figures 2 et 3 représentent une mise en oeuvre d'un contact entre une clef électronique et une base d'accueil,
- la figure 4 est une vue en hauteur d'une clef électronique conforme à l'invention avec un capot externe selon un exemple non revendiqué;
- la figure 5 est une vue en coupe transversale d'une clef électronique le long du support de plot(s) selon un exemple non revendiqué, et
- les figures 6, 7 et 8 illustrent différents agencements d'un plot dans le support de plot(s),
- la figure 9 est une vue schématique de la clef électronique selon un exemple non revendiqué, et
- la figure 10 est une vue schématique de la coupe longitudinale de la clef électronique au niveau d'un plot selon un exemple non revendiqué.

Dans toutes les figures décrites ci-dessous, les éléments communs ou ayant une fonction identique portent les mêmes numéros de référence.

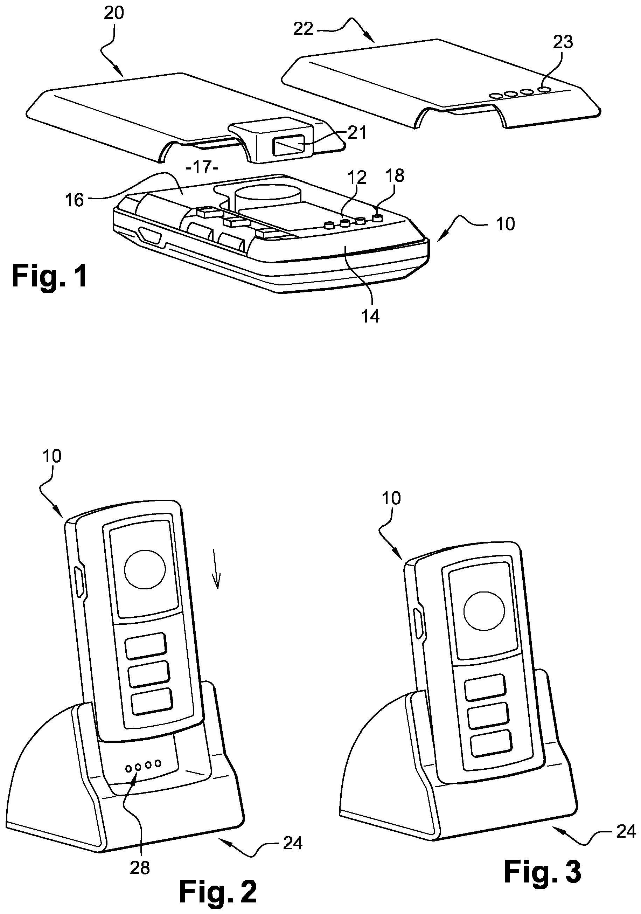

En référence à la figure 1, une clef électronique 10 pour véhicule automobile comprend une connectique 12 destinée à venir en contact avec un système extérieur lors d'une transmission de données et/ou d'énergie électrique.

Ainsi, cette connectique permet de mettre à jour des données dans la clef électronique 10 - par exemple relatives à un contenu multimédia - et/ou de recharger une batterie interne de la clef électronique 10.

Conformément aux différents modes de réalisation de l'invention que nous avons représentés, cette connectique 12 comprend quatre plots 18 saillants d'un support de plot(s) interne 16 de la clef électronique, ces plots étant agencés à ce support de plot(s)16 de façon à former une surface 14 étanche.

Les plots 18 constituent des pièces de contact particulièrement avantageuses en terme de maîtrise de l'étanchéité à leur voisinage. Ainsi, bordés ou entourés par un joint, ou placés à proximité d'une lèvre de clippage, les plots sont particulièrement aptes à conduire le signal ou l'alimentation électrique, sans pour autant former un canal de circulation d'humidité comme ce serait le cas pour d'autres types de connectiques. Les plots sont eux-mêmes des barrières à humidité par leur mode de fixation dans le dispositif comme décrit par ailleurs dans la présente demande.

Le support de plot(s) 16 s'étend vers l'extérieur de la clef électronique 10 et peut consister en un bord de coque interne comme représenté sur les figures 1, 5 et 6.

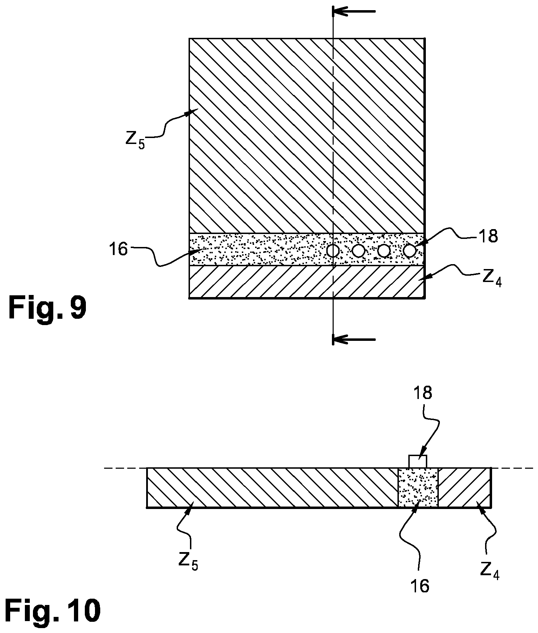

Le support de plot peut également consister en une paroi transversale interne comme représentée sur les figure 9 et 10, en un monticule et / ou en tout autre élément susceptible avantageusement de former une barrière d'étanchéité entre deux zones, l'une sèche Zs dans laquelle l'entrée d'humidité est évitée et une zone humide Zh dans laquelle l'humidité est susceptible de pénétrer.

Egalement en fonction des variantes, le support de plot(s) interne 16 peut être recouvert par une coque externe 20 ou 22 de la clef électronique présentant différents types de connectique.

Selon un premier type de variante conforme à l'invention, la coque externe 20 présente une fiche 21 du type USB reliée aux plots 18 au niveau de leur partie s'étendant du côté de la zone humide Zh. Ainsi, cette variante présente l'avantage de permettre une utilisation d'une fiche USB 21 tout en assurant l'étanchéité de la clef électronique 10 au niveau du support de plot(s) interne 16. Dans une alternative, la fiche USB 21 est reliée aux composants électroniques contenus dans la zone sèche par des fils conducteurs circulant au dessus du supports de plots 16, recouverts et entourés par un joint de la coque supérieure 20, et / ou du support de plot(s) 16, de sorte que ces fils conducteurs ne véhiculent pas d'humidité de la zones humides Zh à la zone sèche Zs.

Ainsi, en cas de projection d'eau, seule la prise USB est affectée. Mais cette coque externe 20 peut aisément être nettoyée, séchée, voire remplacée en cas de besoin.

De fait, la fiche USB peut être remplacée par l'utilisateur lui-même, en cas d'usure intense ou dégradation accidentelle de l'interface, à moindre frais par un simple changement de la coque externe 20.

D'une façon générale, cette réalisation permet de raccorder la clef électronique à différents types de prises ou d'alimentations externes, par exemple du type mini USB ou micro USB.

Selon un second type de variante non revendiquée, la coque externe 22 présente des logements dédiés aux plots 18 afin que, comme représenté sur la figure 2, les plots 18 affleurent à la surface de la coque externe 22.

Dans ce cas, le simple contact requis entre les plots 18 de la clef électronique 10 et un système extérieur pour la transmission de données et/ou d'énergie électrique entraîne une usure limitée de ces plots 18.

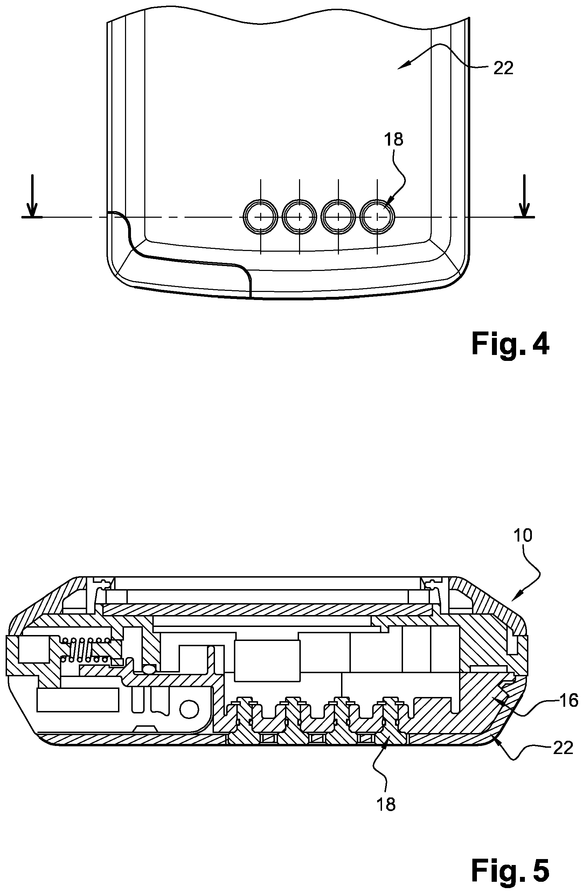

En considérant par exemple que une base 24 (figure 3) munie d'un logement 26 présentant des plots 28, une connexion est établie avec la clef électronique 10 en amenant les plots 18 de cette clef électronique 10 au contact avec les plots 28 de la base 24 (figure 4).

D'autre part pour assurer l'étanchéité à l'interface entre les coques externe 20, 22, et le support de plot(s) 16, au niveau des plots 18, on dispose par exemple des joints collés ou surmoulés au niveau de la coque externe 20, 22.

Selon une alternative, un tel joint peut être porté par le support de plot(s) 16.

L'étanchéité peut également être réalisée par clippage d'une lèvre et d'une rainure complémentaire disposées respectivement sur la coque externe et le support de plot(s), ou vice versa.

La figure 5 représente une vue en coupe de la clef électronique 10 selon l'axe formé par les plots 18. Comme montré par cette figure 5, l'étanchéité de cette surface 14 est assurée en partie par les plots 18 logés dans le support de plot(s) interne 16.

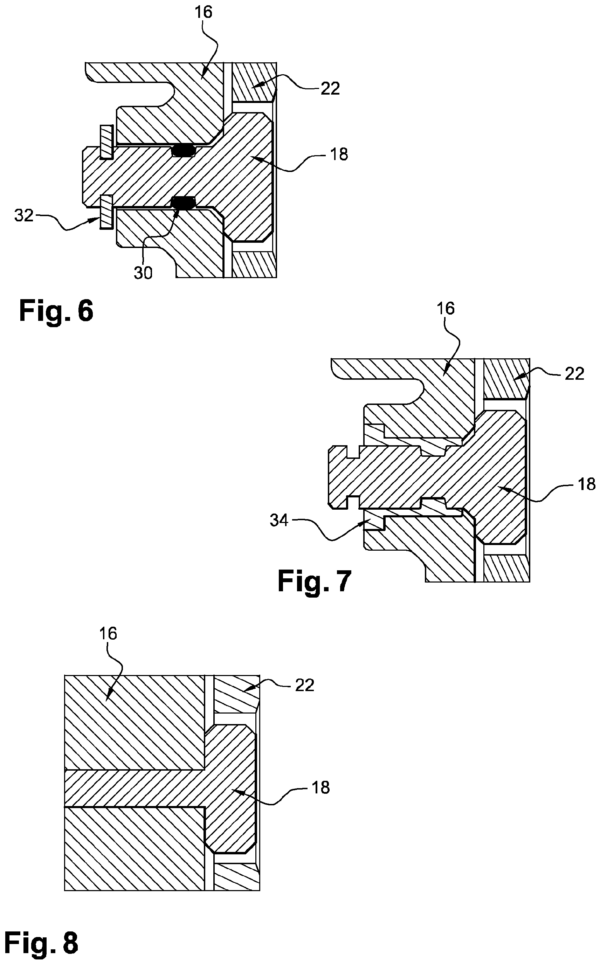

A cet effet, les plots 18 peuvent être logés dans le support de plot(s) interne 16 selon différentes méthodes représentées sur les figures 6, 7 et 8 :

Sur la figure 6, un plot 18 est agencé au support de plot(s) interne 16 à l'aide d'un clip 32, l'étanchéité étant assurée par un joint 30 au niveau de son logement dans le support de plot(s) interne 16.

Sur la figure 7, un plot 18 est agencé au support de plot(s) interne 16 au moyen de colle 34 ayant également la fonction d'assurer l'étanchéité au niveau du logement du plot 18 dans ce support de plot(s) interne 16.

Sur la figure 8, un plot 18 est agencé par une contrainte mécanique obtenue, par exemple, par compression ou surmoulage du support de plot(s) interne 16.

Sur les figures 9 et 10 on a représenté de façon schématique une clef électronique dans laquelle le support de plot(s) 16 est une paroi interne transversale s'étendant de part et d'autre des faces longitudinales. Cette paroi est issue de la surface du fond de la clef électronique. Dans un mode de réalisation non représenté la paroi interne peut être une pièce rapportée fixée dans le fond de la clef électronique avec des moyens d'étanchéité au niveau des surfaces de fixation.

La paroi interne 16 sépare la clef électronique entre une zone humide Zh de petite dimension par rapport à la clef 10 et une zone sèche Zs, contenant les composants électroniques, de grande dimension par rapport à la clef 10. La paroi 16 est étroite pour laisser un maximum d'espace à la zone sèche Zs mais d'une largeur suffisante pour y disposer les plots 18. Dans un mode de réalisation non représenté la paroi 16 peut être plus étroite à son sommet qu'à sa base.

La présente invention concerne différents types de clef électronique, notamment des clefs servant comme identifiant de l'utilisateur d'un véhicule et/ou permettant d'accéder à un contenu multimédia.

## Revendications

1. Clef électronique (10) pour véhicule automobile munie d'une connectique (12) destinée à établir une connexion avec un système extérieur lors d'une transmission de données et/ou d'énergie électrique, ladite connectique (12) comprenant des plots (18) saillant d'un support de plots interne (16) de la clef électronique (10), lesdits Plots (18) étant agencés de façon étanche au support de plots interne (16), ledit support de plots interne (16) formant une barrière d'étanchéité entre deux zones dans la clef électronique, l'une sèche Zs contenant les composants électroniques de la clef et dans laquelle l'entrée d'humidité est évitée et une zone humide Zh dans laquelle l'humidité est susceptible de pénétrer, ledit support de plots interne (16) étant recouvert par une coque externe (20) de la clef électronique, **caractérisée en ce que** la coque externe (20) présente une fiche du type USB, mini USB ou micro USB (21), et **en ce que** ladite fiche (21) est reliée aux plots (18) au niveau de leur partie s'étendant du côté de la zone humide (Zh).

2. Clef électronique (10) selon l'une des revendications précédentes **caractérisée en ce qu'**au moins un joint (30) est maintenu entre chaque plot (18) et le support de plot(s) interne (16) de la clef électronique (10).

3. Clef électronique (10) selon l'une des revendications précédentes **caractérisée en ce que** chaque plot (18) est maintenu solidaire du support de plots interne (16) au moyen d'un clip (32).

4. Clef électronique (10) selon l'une des revendications précédentes **caractérisée en ce que** chaque plot (18) est maintenu solidaire du support de plots interne (16) au moyen de colle (34).

5. Clef électronique (10) selon l'une des revendications précédentes **caractérisée en ce que** chaque plot (18) est maintenu solidaire du support de plots interne (16) par compression de ce support de plots interne (16) sur le plot (18).

## Patentansprüche

1. Elektronischer Schlüssel (10) für ein Kraftfahrzeug, welcher mit einem Anschluss (12) ausgestattet ist, der dazu bestimmt ist, bei einer Übertragung von Daten und/oder von elektrischer Energie eine Verbindung mit einem externen System herzustellen, wobei der Anschluss (12) Kontaktstifte (18) umfasst, die von einem inneren Kontaktstiftträger (16) des elektronischen Schlüssels (10) vorstehen, wobei die Kontaktstifte (18) in dichter Weise an dem inneren Kontaktstiftträger (16) angeordnet sind, wobei der innere Kontaktstiftträger (16) eine Dichtheitsbarriere zwischen zwei Bereichen in dem elektronischen Schlüssel bildet, einem trockenen Bereich Zs, der die elektronischen Bauteile des Schlüssels enthält und in welchen das Eindringen von Feuchtigkeit vermieden wird, und einem feuchten Bereich Zh, in welchen Feuchtigkeit eindringen kann, wobei der innere Kontaktstiftträger (16) von einer Außenschale (20) des elektronischen Schlüssels bedeckt ist,
**dadurch gekennzeichnet, dass** die Außenschale (20) eine Steckvorrichtung vom Typ USB, Mini-USB oder Micro-USB (21) aufweist, und dadurch, dass die Steckvorrichtung (21) mit den Kontaktstiften (18) an deren sich auf der Seite des feuchten Bereichs (Zh) erstreckendem Teil verbunden ist.

2. Elektronischer Schlüssel (10) nach einem der vorhergehenden Ansprüche, **dadurch gekennzeichnet, dass** wenigstens eine Dichtung (30) zwischen jedem Kontaktstift (18) und dem inneren Kontaktstiftträger (16) des elektronischen Schlüssels (10) gehalten wird.

3. Elektronischer Schlüssel (10) nach einem der vorhergehenden Ansprüche, **dadurch gekennzeichnet, dass** jeder Kontaktstift (18) mittels eines Clips (32) fest mit dem inneren Kontaktstiftträger (16) verbunden gehalten wird.

4. Elektronischer Schlüssel (10) nach einem der vorhergehenden Ansprüche, **dadurch gekennzeichnet, dass** jeder Kontaktstift (18) mittels Klebstoff (34) fest mit dem inneren Kontaktstiftträger (16) verbunden gehalten wird.

5. Elektronischer Schlüssel (10) nach einem der vorhergehenden Ansprüche, **dadurch gekennzeichnet, dass** jeder Kontaktstift (18) mit dem inneren Kontaktstiftträger (16) durch Zusammendrücken dieses inneren Kontaktstiftträgers (16) auf dem Kontaktstift (18) fest verbunden gehalten wird.

## Claims

1. Electronic key (10) for a motor vehicle provided with connector technology (12) intended to establish a connection with an external system upon a transmission of data and/or of electrical energy, said connector technology (12) comprising bump contacts (18) protruding from an internal bump contact support (16) of the electronic key (10), said bump contacts (18) being arranged in a seal-tight manner with respect to the internal bump contact support (16), said internal bump contact support (16) forming a seal-tight barrier between two zones in the electronic key, one dry Zs containing the electronic components of the key and in which the ingress of moisture is avoided and a wet zone Zh in which moisture is likely to enter, said internal bump contact support (16) being covered by an outer shell (20) of the electronic key,
**characterized in that** the outer shell (20) has a plug of USB, mini USB or micro-USB type (21), and **in that** said plug (21) is linked to the bump contacts (18) at their part extending on the side of the wet zone (Zh).

2. Electronic key (10) according to one of the preceding claims, **characterized in that** at least one seal (30) is held between each bump contact (18) and the internal bump contact support (16) of the electronic key (10).

3. Electronic key (10) according to one of the preceding claims, **characterized in that** each bump contact (18) is held secured to the internal bump contact support (16) by means of a clip (32).

4. Electronic key (10) according to one of the preceding claims, **characterized in that** each bump contact (18) is held secured to the internal bump contact support (16) by means of glue (34).

5. Electronic key (10) according to one of the preceding claims, **characterized in that** each bump contact (18) is held secured to the internal bump contact support (16) by compression of this internal bump contact support (16) on the bump contact (18).
